(19)

Europäisches
Patentamt
European
Patent Office
Office européen
des brevets

(11) **EP 2 273 100 A1**

(12) **EUROPEAN PATENT APPLICATION**

(43) Date of publication:
**12.01.2011 Bulletin 2011/02**

(51) Int Cl.:
***F03B 13/06*** *(2006.01)* ***F03B 17/00*** *(2006.01)*
***F03B 17/02*** *(2006.01)*

(21) Application number: **09380116.5**

(22) Date of filing: **10.06.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Rebon Mayobre, Manuel
15624 Ares a Coruna (ES)**

(72) Inventor: **Rebon Mayobre, Manuel
15624 Ares a Coruna (ES)**

(74) Representative: **Carvajal y Urquijo, Isabel et al
Clarke, Modet & Co.
c/ Goya, 11
28001 Madrid (ES)**

(54) **Hydroelectric power station**

(57)      Hydroelectric power station which uses a certain amount of water situated and/or stored at a lower level, this water is moved upwards, stored at a higher level and later poured to the lower level again, the kinetic energy of the fluid being transformed into electric energy by means of a power converter comprising: a cistern (21) situated at a lower level, a deposit (1) situated at a higher level, a first pipe (8) between the deposit (1) and the power converter (7), a second pipe (22) between the energy converter (7) and the cistern (21), and means to carry the water from the cistern (21) to the deposit (1). The means to carry the water comprise a plurality of first cistern wagons (4), a second wagon (6) which can hold a plurality of animals (6e), a path (10) for the animals to return (6e) from the lower to the higher level, and a cable (5) connecting the first cistern wagons (4) and the second wagon (6).

FIG.7

$T$   $T$   $T$

$P_2$   $P_1$

EP 2 273 100 A1

**Description**

**FIELD AND OBJECT OF THE INVENTION**

The invention refers to the field of renewable energy and more specifically to a device that converts the energy from a watercourse into electric energy.

**STATE OF THE ART**

Nowadays, there are known different facilities to transform energy which starting from a watercourse, transform kinetic energy and/or the potential thereof into electric energy by means of transformation equipment such as turbines. Current hydroelectric power stations supplied by rivers need to accumulate great water flows in a reservoir. Said flow varies according to the seasons of the year and it can be scarce in times of severe dryness. Besides, they are too environmentally unfriendly.

If nowadays there is any working hydroelectric power station driven by the forces of ocean waves, these depend on the existence of waves to be able to work.

For all of these reasons, it has been detected the need to offer a system that is different from those existing nowadays that supplies electricity 24 hours a day in a completely autonomous way. This is achieved by this new invention, since it only needs a small volume of water for its operation.

**DESCRIPTION OF THE INVENTION**

The present invention refers to a hydroelectric power station which uses water situated at a lower level, said water which is moved upwards, stored at a higher level and later poured to the lower level again, thus the kinetic energy of the fluid transforming into electric energy by means of a power converter.

Water from a river, lake or the sea is used to achieve such purpose. When sea water is used (although it is not advisable due to its corrosive action), a cistern which is filled once shall be built by pumping sea water or by other means, in order to avoid the problems caused by waves or tides. The cistern must have enough capacity to provide water for the deposit situated at the higher level.

As it is observed, the cistern can be built in any region of the planet, not necessarily near a river, lake or sea, since filling the cistern only once would be enough and when the system starts functioning, water coming out of the turbine is taken to the cistern by means of a pipe, thus re-feeding the cistern. Therefore, the power station works as a closed circuit, where the same water is always circulating, without being wasted.

One of the advantages of using a cistern is that the lower level can be placed at any convenient area, thus avoiding inconveniences when locating the power station.

The power station consists of a cistern situated at the lower level, a deposit situated at a higher level, a first pipe between the deposit and the energy converter, a second pipe between the power converter and the cistern, and means to carry the water from the cistern to the deposit.

In a more concrete description, the means to carry the water consist of several first cistern wagons which can hold a certain volume of water and are moved from the lower level to the higher level and vice versa along the first rails; a second wagon which can hold a variety of animals and is moved between the lower and higher levels along the second rails which are parallel to the first rails; a return path for the animals to move from the lower level to the higher level; and a connecting cable between the first cistern wagons and the second wagon, where one of the ends of this cable is connected to a fixed anchoring point in the higher level, and the other end is connected to the lower part of the second wagon. The cable goes through at least one movable pulley connected to the higher part of each of the first wagons, and this cable goes through a first fixed pulley, attached to the ground and placed at a higher altitude than the deposit which is, according to the vertical, aligned to the first rails; later, the cable goes through a second fixed pulley, attached to the ground and placed at the same altitude than the first pulley which is, according to the vertical, aligned to the second rails of the second wagon until an anchoring point to the second wagon is reached, so that both the first and second wagons adopt two positions, a higher position in which the wagons are situated at the higher level, and a lower position in which the wagons are situated at the lower level; when the first wagons are situated at their higher position, the second wagon is situated at its lower position, and vice versa.

In this way, the first wagon carries a certain volume of water in the lower level poured from the cistern, and once the cistern is full, the animals in the higher level go one by one into the second wagon until the weight of the second wagon plus the animals exceeds the weight of the first wagons plus the water in them; at this moment the second wagon starts to descend by means of the second rails, this downward movement becoming an upward movement for the first wagons due to the pulley systems described which consist of two fixed pulleys, fixed to anchor points in the higher level, and at least one movable pulley fixed to each first wagon. Once the first wagon has reached the higher level, the water in it is poured into the deposit, being this first wagon kept in this position so that the animals in the second wagon go out until it is empty. Once the first wagon has been completely emptied, the animals inside the second wagon in the lower level go out immediately until the wagon is emptied, at the same time, the first wagons are also being emptied and in this way the horses have the time it takes to empty the wagon plus the time it takes to go down, to go up the fenced path.

Later, due to the fact that the overall weight of the first wagons is higher than the weight of the second wagon, the first wagons descend and at the same time the second wagon ascends until it reaches its initial cycle position, starting a repetitive filling and emptying cycle. While the movement of the wagons is taking place, the animals move from the lower level to the higher level through the path, to go into the second wagon again once it has reached the higher level, giving way to the elevation of the first wagons once more.

Once the deposit in the higher level is full, the water within is taken through the first pipe to the power converter and the water kinetic energy is turned into electric energy; once the water has gone through the converter, it goes out through the second pipe until it reaches the cistern in the lower level; therefore, the water conduction cycle is closed and does not require external water for the correct functioning of the hydroelectric power station.

In an aspect of the invention, the cistern can be supported by several columns which help place the cistern in an essentially horizontal position; the cistern having in the front part of its bottom several gates for the expulsion of the water inside it into the first cistern wagons.

Each of the first cistern wagons can be formed by parallelepiped closed bodies which shall have an opening in the front part of their upper wall, aligned to the cistern gates when the corresponding first wagon is in its lower position.

In this way, the first wagons filling takes place, when these first wagons are placed below the cistern, just by opening the cistern gates and pouring the water from the gates through the described openings in the wagon.

Each of the first wagons shall have wheels in their lower walls for the movement of the wagon on the first rails, having at the back of said lower walls an emptying valve configured to pour water into the deposit when the first wagon is placed in its higher position.

Besides each of the first wagons can have a plurality of partitions, perpendicularly placed on the wagon front wall and being these partitions parallel among themselves. The main function of these partitions is to limit any possible water turbulence during the movement of the first wagon and thus avoid water spillage outside the first wagon during its upward movement.

As regards the second wagon, it can have a rectangular shape and comprise a fenced platform which comprises a boarding with downward vertical supports on whose ends the wagon wheels, which move on the second rails, are placed; the second wagon having a gate at the front part of one of its sides for the animals to go in and out of the wagon.

## DESCRIPTION OF THE DRAWINGS

The following is a brief description of a series of drawings which will help understand the invention better and which clearly relate to an embodiment of said invention which is presented as a non-limiting example thereof.

Fig. 1 shows a schematic side view of the hydroelectric power station object of the present invention, the power station is located near a hill and at a certain height.

Fig. 2 shows a schematic plan view of the hydroelectric power station object of the present invention when the first wagons, which are part of the power station, are placed at their lower position and are being filled with water from the cistern.

Fig. 3 shows a schematic plan view of the hydroelectric power station object of the present invention when the first wagons, which are part of the power station, are placed at their higher position and the water is being dumped in the deposit at a higher level.

Fig. 4 shows a side view of the area of the power station where the cistern is located, the moment represented shows the first wagons being filled with water from the cistern.

Fig. 5 shows a plan view of the second wagon in its lower position.

Fig. 6 shows a plan view of Fig. 5.

Fig. 7 shows a strength diagram used to calculate the weight that the second wagon should have in order to lift the first wagons filled with water.

## PREFERRED EMBODIMENTS OF THE INVENTION

The present invention refers to a hydroelectric power station based on taking water from a cistern (21) previously filled with water, and carrying it to a deposit situated at great height, for example 100, 200, 300 meters, etc. This height, for example, may be that of a hill.

To this end, two pairs of rails are placed on the hill, the first rails (3) connect the deposit (1) and the cistern (21), along which several first cistern wagons (4) move; the second rails (9) connect the higher level to the lower level, along which the second wagon moves carrying several animals (6e), the chosen animals in this embodiment being horses, but other animals with similar characteristics can be chosen, for example mules, donkeys, oxen, etc.

The first wagons (4) are connected to the second wagon by means of a cable (5) whose ends are fixed respectively to each wagon so that when the second wagon goes down (6), the first cistern wagons (4) go up, and vice versa; this is achieved by balancing the total weight of the first wagons (4) plus the weight of the volume of water they can hold, to the total weight of the second wagon (6) plus the weight of the animals (6e) it carries.

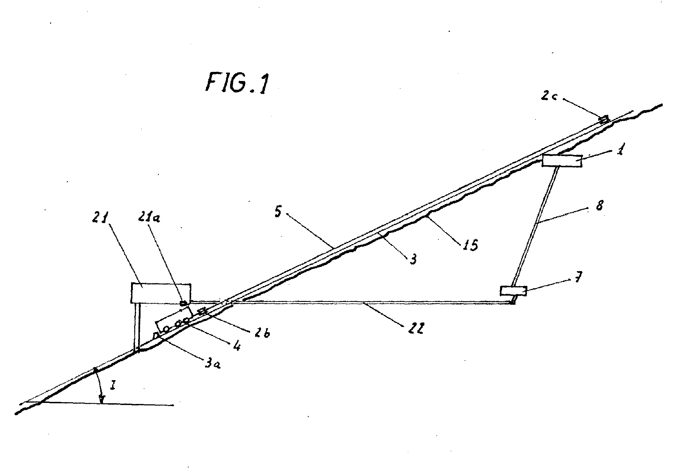

Fig. 1 shows an overall view of the system, where a hill (15) can be seen which is approximately 265.6 meters high with respect to the cistern level (21), with an inclination angle (I) of 27 degrees with respect to such level. On top of the hill there is a deposit (1) which has, in this case, a capacity of 1159.20 m$^3$ of water, 579.60 m$^3$ of which correspond to the amount of water used in one hour by the power converter which, in this case, is a turbine (7), and the remaining 579.60 m$^3$ correspond to the volume of the first cistern wagons (4) so that there is always a water reserve, thus the cycle being a continuous one.

In the present embodiment and for the sake of simplicity and clarity, only one first wagon has been represented, although the calculations detailed further below have been done on the basis of five first wagons (4). The number of first wagons can vary according to the level of electric power wished to obtain in the power station; therefore, the number of five chosen for first wagons for the calculations is a non-limiting example.

Between the deposit (1) and the cistern (21), the first rails (3), on which the first cistern wagons (4) go up and down, are located, these cistern wagons take the water from the cistern (21) and pour it into the deposit (1). A cable (5) is used in order to pull up and down the first wagons (4), this cable having one of its ends fixed to a fixed point (2a) in the higher level, this cable (5) goes through a movable pulley (2b) which pulls the first wagons and is fixed to the first wagon. A first pipe (8) comes from the deposit (1) and takes the water to the turbine (7). In addition, there is a second pipe (22) which takes the water from the release of the turbine (7) to the cistern (21), re-feeding it.

At the lower end of each of the first rails (3) some first stops (3a) have been placed, which stop the first wagons (4) exactly at the lower position, in which they take the water from the cistern (21); when the wagons touch the stops (3a) the cistern gates or valves (21a) shall open, and they shall close, for instance, when the water reaches a certain level within the first wagons.

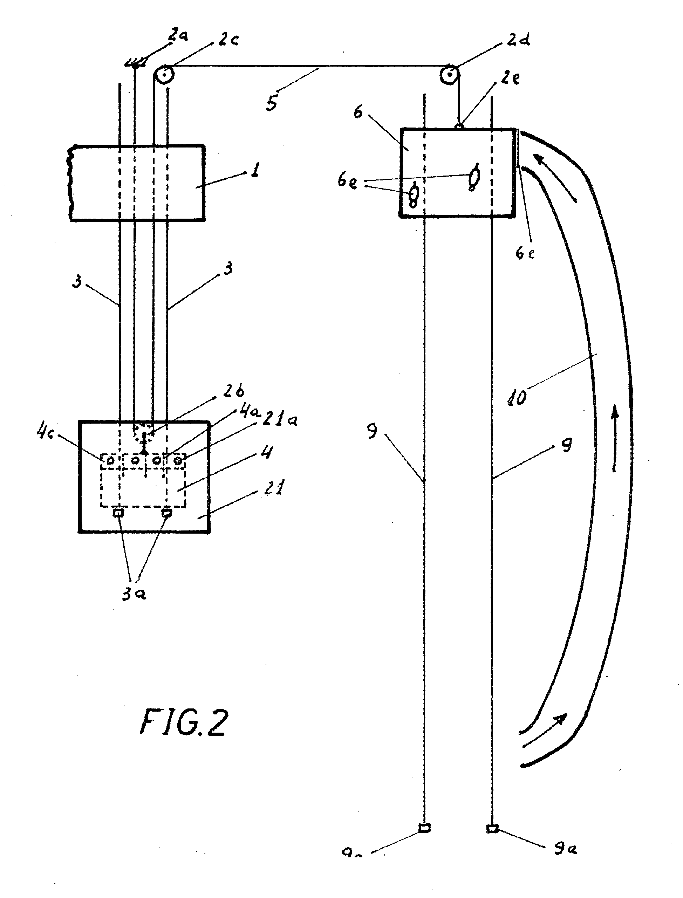

Fig. 2 shows one of the first wagons (4) taking water from the cistern (21), where the cistern exit gates or valves (21 a) are placed on an opening (4c) in the front part of the wagon upper wall.

In this figure we can observe how the cable (5), which comes from the fixed point (2a), goes through the movable pulley (2b), then through the first fixed pulley (2d) fixed to the ground at the higher level, and it finally goes through the second fixed pulley (2d) that is also fixed to the ground in the higher level at the same level as the first fixed pulley; the cable (5) end being also joined to an anchoring point (2e) of the second wagon (6).

The second rails (9) along which the second wagon (6) moves, have stops (9a) in order to keep said wagon (6) on a steady movement when in its lower position. In addition, we have simplified the representation of the fenced path (10) which goes from the lower to the higher level through which the horses shall go in order to access the higher level. A sliding door (6c) shall be installed in the second wagon (6) in order to let the horses go in and out.

The position of the second wagon (6) at the higher level does not necessarily have to be at the same height as the deposit (1); it can be placed at any height, as long as its trajectory when going down is long enough to be able to make the first wagons go up.

In the present embodiment of the invention, it is considered the use of only one movable pulley (2b); however, there could be cases in which an increase in the number of running lines going through the pulley is desired, which in turn decreases the applied force to a third or a forth part, etc; however, and to the same end, the trajectory the horses cover could also be multiplied, and even different fixed and movable pulleys could be combined.

For example, if the first wagons (4) moved along rails (3) which have a steep slope due to the relief of the ground, and so a considerable height was reached with a short trajectory, and the second wagon (6), having the function of making the first wagons go up, could move along a rail with a less steep slope. In this case, as the second wagon would also cover a shorter trajectory, the number of running lines could be increased in order to decrease the strength applied by the second wagon. In any case, both rails can have different inclination angles.

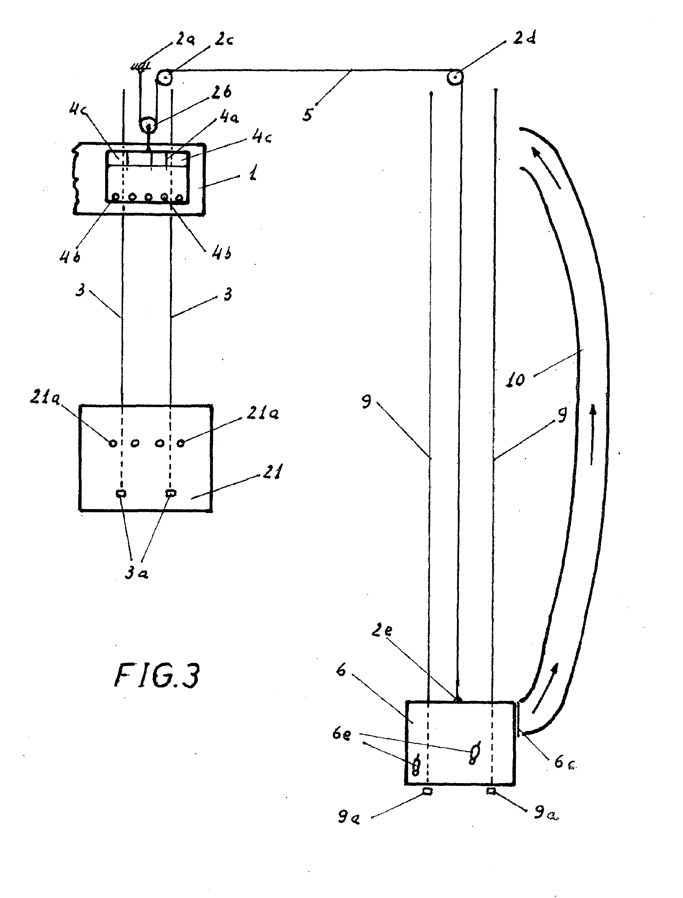

Fig. 3, shows a plan view of Fig. 2 with the exception that the first wagon (4) is located at the higher level, water being poured from the wagon (4) into the deposit (1) with the gates or valves (4b) open in order to pour the water. The second wagon (6) is located at the lower level, resting on the stops (9a). In this position, the horses leave the wagon through the sliding door (6c) to go through the fenced path (10) to access the higher level.

The stops (3a and 9a) shall have damping to reduce the wagons crash (4) and (6), and mainly that of the second wagon (6). The wagons may have a brake used to keep them still when they are both at the higher and lower level, and to slowly stop the movement of the wagons before they reach the stops.

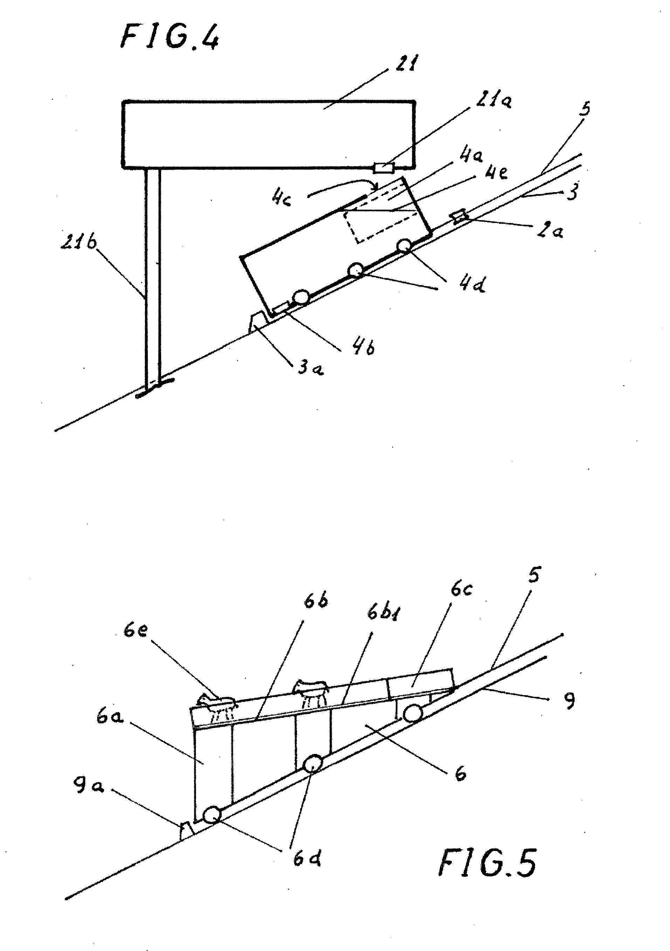

Fig. 4 shows the first wagon (4) taking water from the cistern (21), the cistern is two meters high on the vertical of the first rails (3); the wagon (4) goes under the cistern (21) until it reaches the stops (3a) and stops its movement. The cistern is supported by columns (21 b). On the front wall of the bottom of the cistern there is a plurality of gates (21a) for the water to go out of the cistern and into the first wagon (4), said wagon which, to that purpose, has a plurality of openings (4c) to be filled with water. Below said openings, there are some vertical partitions (4a) on the wagon front wall (4), which prevent water spillage during wagon movement, these partitions being made of metal sheets, and parallel to one another. Reference (4e) shows the level reached by the water within the cistern wagon when completely full, and reference (4d) corresponds to the wagon wheels. Finally, reference (4b) corresponds to the water exit valves of the first wagon.

Logically, there shall exist a process control at all times, either to brake the wagons before they reach the stops and avoid any impact, to fill and empty all the components of the power station, or to handle the animals when the power station is working.

Fig. 5 shows a side view of the second wagon (6) which carries the horses, said wagon (6) having a rectangular shape and consisting of a fenced platform (6b) made of wooden flooring (6b1) for the animals to step firmly during wagon movement; from this fenced platform a plurality of supports (6a) stand in vertical downward direction, at whose ends the wheels (6d) of the wagon are located, wheels which move along the second rails (9); the second wagon (6) featuring, in the front part of one of its sides, a gate (6c) to let the animals go in and out of the wagon.

In order to provide more examples of the power output of the hydroelectric power station object of the present invention, an example of an embodiment is described below; including details of the calculations done in order to estimate the output of the facilities.

Deposit height calculation with respect to the turbine, and trajectory covered by the wagons

Considering

d - Distance between the higher level deposit and the position of the cistern wagon when taking water from the cistern equals 585 meters.

I - Inclination angle of the rail and of the hill equal 27 degrees.

h - Height at which the deposit is located with respect to the cistern: h= d sin 27° = 585 sin 27 = 265.6 m2.

The cistern (21) base is 2 meters high on the first rails (3).

Water level in the cistern is 1 meter.

The second pipe (22) to the turbine exit (7) is 1.50 meters above water level in the cistern (21).

Turbine height (7) with respect to the first pipe (22) is 2 meters.

Therefore, the total height difference is 6.50 meters.

Therefore, turbine (7) height with respect to the deposit (1) shall be:

$$265.6 - 6.50 = 259.1 \text{ m}$$

Since there are 585 meters between the cistern (21) water intake and the deposit (1), and the first cistern wagon (4) moves 15 meters higher to be emptied, the height shall be:

$$585 + 15 = 600 \text{ m}$$

Therefore, the trajectory of each first cistern wagon (4) between the cistern and the deposit is 600 meters, and the trajectory of the second wagon (6) is doubled, that is to say, 1200 meters due to the fact that a movable pulley is used.

Time invested in the process

Considering that the working day of the horses shall be from 08:00 to 24:00 hours, the following periods of time would be invested in the process:

| Action | Working hours | Time to be used |
|---|---|---|
| Filling the cistern wagon with 58,000 liters of water. | 8:00 - 8:07 | 7 minutes |
| Time necessary for the horses to go into the second wagon | 8:00 - 8:07 | 7 minutes |
| Time used for the first wagon to be lifted | 8:07 - 8:15 | 8 minutes |
| Time used for the first wagon to be emptied | 8:15 - 8:22 | 7 minutes |
| Time necessary for the horses to go from the lower to the higher level | 8:15 - 8:21 | 6 minutes |
| Time used for the first wagon to be taken down | 8:22 - 8:30 | 8 minutes |
| Time invested in the process | | 30 minutes |

That is to say, the total period of time invested by the first wagon in two consecutive water takings is 30 minutes. Therefore, in one hour the first five cistern wagons pour into the deposit 2 x 5 x 58,000 liters = 580 m$^3$ of water.

Actually, the horses have 22 minutes to go out of the wagon into the lower level at 08.15 and go back into the higher level at 08.37.

Calculation of the wagon speed and acceleration needed to satisfy the times described

a - If the time invested on taking down the horses wagon is 8 minutes, and the trajectory is 1,200 meters, it shall be:

$$\text{Medium speed} = S / t = 1{,}200 / 480 = 2.5 \text{ m/s.}$$

$$\text{Acceleration} = \text{final } V^2 - \text{initial } V^2 / 2 \times S = 52 - 0 / 2 \times 1{,}200 = 0.0104 \text{ m/s}^2$$

b - The time invested on the horses wagon lifting is 8 minutes, therefore the speeds and accelerations are the same:

Medium V= 2.5 m/s.
to = 0.0104 m/s$^2$

Weight the empty cistern wagon should have in order to lift the horse wagon without horses to the higher level.

If we consider that the second wagon has an empty weight of 5,000 kg., and the medium speed it should reach during the 1,200 meters lifting should be of 2.5 m/s, with an acceleration of 0.0104 m/seg$^2$. The result of this calculation is a total of 10,286.45 kg for the empty cistern wagon.

If we consider that the movable pulley system plus two fixed pulleys has a performance of N = 0.9, then the weight of the empty cistern wagon should be:

$$P = P \times 1 / N = 10{,}286.45 \times 1 / 0.90 = 11{,}429.39 \text{ kg.}$$

Calculation of the weight the horse wagon should have when carrying the horses, in order to lift the cistern wagon filled with 58,000 liters of water.

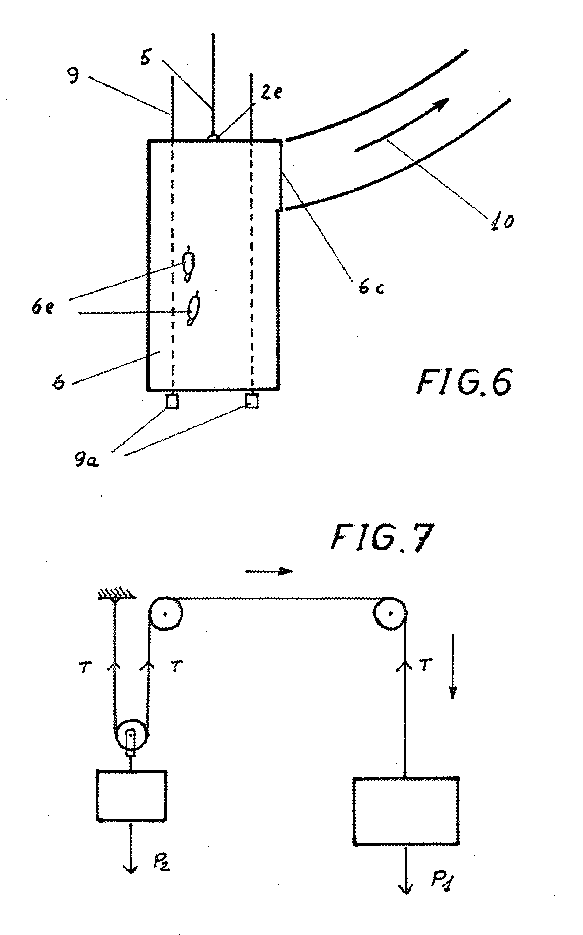

According to the scheme of Fig. 7 wherein:

P2 = total weight of the cistern wagon full of water.
m2 = mass of the cistern wagon full of water.
P1 = total weight of the horse wagon with the horses in it.

m1 = mass of the horse wagon with the horses in it.
T = cable tension.
I = inclination angle of the two rails, equal to 27 degrees.
V = medium speed to lower the horses wagon, equal to 2.5 m/sec.
a = acceleration of the horse wagon in its downward movement equal to 0.0104 m/sec$^2$.
n = coefficient of the wagons rolling on the rails equal to 0.006.

Therefore, it shall be:

$$2\,T - P_2 \sin 27^o - P_2\, n \cos 27^o = m_2\, a$$

$$P_1 \sin 27^o - n\, P_1 \cos 27^o - T = m_1\, a$$

Multiplying the first term by ½, we obtain:

$$T - 1/2\, P_2 (\sin 27^o + n \cos 27^o) = 1/2\, m_2\, a$$

Adding both terms we obtain:

$$P_1 (\sin 27^o - n \cos 27^o) - 1/2\, P_2 (\sin 27^o + n \cos 27^o) = (m_1 + 1/2\, m_2)\, a$$

$$P_1 \times 0.4486 - 1/2\, P_2 \times 0.4593 = P_1 \times 0.00106 + P_2 \times 0.000531$$

$$P_1 \times 0.44754 = P^2 \times 0.23018$$

Whereas:

$$P_2 = \text{effective empty weight + water weight} = 11429.39 + 58,000 = 69,429.39 \text{ kg.}$$

Therefore, it shall be:

$$P_1 = 69,429.39 \times 0.23018 / 0.44754 = 35,709.11 \text{ kg.}$$

Since this is a system of two fixed pulleys and one movable pulley with steel cable, which we consider has a performance of N = 0.90, therefore, it shall be:

$$P_1 = P1 \times 1 / N = 35,709.11 \times 1 / 0.90 = 39,676.79 \text{ kg.}$$

As the second wagon (6) carrying the horses has an empty weight of 5,000, it shall be:

$$39,676.79 - 5,000 = 34,676.79 \text{ kg.}$$

That is to say, if we consider that each horse weighs 450 kg., the weight of the horses in the second wagon shall be of 34,676.79 kg (There are breeds of horses which weigh more than 800 kg., therefore, more water could be lifted with the same number of horses). It shall be:

$$34,676.79 / 450 = 77.06 = 77 \text{ horses.}$$

Therefore, if each first wagon (4) loaded with 58 m$^3$ of water, requires 77 horses to be lifted, as there are five cistern wagons, it shall be:

$$5 \times 77 = 385 \text{ horses.}$$

If the horses work from 08:00 to 24:00 hours, that is 16 hours a day, and each horse works 8 hours a day, twice the number of horses is needed, that is to say: 2 x 385 = 770 horses.

Therefore, with two groups of horses, group A with 385 horses and group B with 385 horses, each group working 4-hour shifts and resting four hours, we can lift 580m$^3$ of water in one hour, this action shall be performed during 16 straight hours, supplying water to the turbine for 16 hours.

Following their natural biological rhythm, the horses shall sleep at night; so there is a period of time from 00:00 to 08:00 during which they do not work.

If we wish to keep the power station working, water can be lifted by means of tankers (not shown in the drawings), which would be filled in the cistern (21) at the lower level and they would be emptied in the deposit (1) at the higher level; or, the first cistern wagons (4) could be lifted on the rails (3) of the present invention by means of a horizontal drum in which the cable pulling the cistern wagons would be coiled. The drums would be turned by diesel oil or biodiesel engines.

If it is desired to use only horses to lift the water, and not tankers or wagons moved by a horizontal drum when the horses sleep, then during the horse 16-hour working time we would have to increase the volume of water needed for the turbine to function 24 straight hours. In this case, the water storing capacity of the deposit in height and of the cistern would have to be increased.

Calculation of the production cost with horses

If at least 770 horses are needed, and since the horses do not need a special diet because they only trot, we shall consider that their maintenance is € 1.5 a day, not taking into account the grass they eat. Therefore, it shall be:

$$770 \times 1.5 = €1,155 \text{ per day}$$

| | |
|---|---|
| Daily cost of feeding the animals | € 1,155 |
| Daily vet expenses | € 70 |
| Total daily cost | € 1,225 |

As there are mares in the group, once they breed, the total cost shall be less due to the profits generated from selling of the foals, horses and the value of the milk, etc.

A horse life expectancy ranges between 25 and 30 years, and this kind of labor can be performed even when the horses are old, this means that the same horse can work for more than 25 years.

As the dung they produce becomes manure for the fields in which they graze, this is an environmentally-friendly system, sustainable, inexhaustible and not dependent on external factors of any kind.

Both the horse wagon and the fenced path (10) along which the horses go up can be protected from the wind and the weather -mainly in winter time and in countries with cold weather conditions- and they can also have a lighting system.

Calculation of the cost generated by the use of tankers during 8 hours.

Turbine = 580 m$^3$/hour. Therefore, in 8 hours it shall be:

$$580 \times 8 = 4,640 \text{ m}^3.$$

If we take into account that a regular tanker can hold 36 m³ of water, it shall be:

$$4{,}640 / 36 = 128.80 = 129 \text{ trips.}$$

Therefore, 129 trips are needed during 8 hours to supply the turbine with water. If each tanker spends 30 minutes in one trip, this means that in 8 hours it shall complete 16 trips, therefore:

$$129 / 16 = 8.06 = 8 \text{ tankers.}$$

That is to say, with eight 36 m³-tankers, each of them working 8 straight hours, it is possible to generate the 4,649 m³ needed to supply the turbine with water.
If we consider that water tanker uses 90 liters of diesel oil or biodiesel per hour, it shall use 45 liters in 30 minutes.
If the tankers complete 129 30-minute trips, it shall be:

$$129 \times 45 = 5{,}805 \text{ liters.}$$

If a liter of diesel oil costs € 1, the daily cost is € 5,805, plus the cost of the horses' daily maintenance, the total is 5,805 + 1,225 = € 7,030 per day.

Calculation of water use in the turbine

As the turbine is located 259.1 meters below the deposit level at the higher level, it shall be:

$$V = \sqrt{2xgxh} \;=\; \sqrt{2x9.8x259.1} \;=\; 71.26 \text{ m/sec}$$

As the radius of the first pipe (8) connecting the entrance of the turbine (7) is r = 0.0346m, it shall be:

$$\text{Use} = 0.60 \times \pi \times r^2 \times v = 0.6 \times 3.14 \times 0.0346^2 \times 71.26 = 0.161 \text{ m}^3\text{/s}$$

The use per hour shall be:

$$\text{Use per hour} = 3600 \times 0.161 = 579.60 \text{ m}^3\text{/s.}$$

Calculation of the electric energy generated by the water when going into the turbine (7) and watts of electricity generated.

The turbine (7) consumes 0.161 m³ The specific weight of the freshwater is w= 1.00; therefore, the weight of the 0.161 m³ shall be:

$$\text{Weight} = \text{Volume} \times w = 0.161 \times 1.00 = 0.161 \text{ Tm} = 161 \text{ kg.}$$

Energy produced by 161 kg. At the entrance of the turbine (7) the energy produced by 161 kg. equals the potential energy they have in the deposit (1) at 259.1 meters high; therefore, it shall be:

$$\text{Potential energy} = P \times h = 161 \times 259.1 = 41{,}715.1 \text{ kgm.}$$

In watts it shall be:

$$41715.1 \times 9{,}81 = 409{,}225.\ 13\ W/s = 409.22\ kW/s.$$

409.22 kW/s x 3600= 1,473,192 kW/h, per day, it shall be:

$$1{,}473{,}192 \times 24 = 35{,}356{,}608\ kW/h.$$

If we consider that the system has a 90% performance, it shall be:

$$35{,}356{,}608 \times 0.90 = 31{,}820{,}947,\ 20\ kW/h = 31.82\ GW/\ hours\ per\ day.$$

Horses working day

Since five first cistern wagons (4) will be used, and each wagon needs a total of 77 horses, therefore, the total shall be:

$$5 \times 77 = 385\ horses.$$

During the 16 hours two groups of 385 horses each will be used, it shall be:

| Group | N° of horses | Working day | Time the horses have worked |
|---|---|---|---|
| A | 385 | 08-00 to 12-00 hours | 4 hours |
| B | 385 | 12-00 to 16-00 hours | 4 hours |
| A | | 16-00 to 20-00 hours | 4 hours |
| B | | 20-00 to 24-00 hours | 4 hours |
| Daily working hours for group A | | | 8 hours |
| Daily working hours for group B | | | 8 hours |
| Total of working hours for both groups | | | 16 hours |

**Claims**

1. Hydroelectric power station which uses a certain amount of water situated and/or stored at a lower level, which is moved upwards, stored at a higher level and later poured to a lower level, the kinetic energy of the flow being transformed into electric energy by means of a power converter comprising:

   a cistern (21) located at the lower level,
   a deposit (1) located at the higher level,
   a first pipe (8) connecting the deposit (1) to the power converter (7),
   a second pipe (22) connecting the power converter (7) to the cistern (21), and
   means to carry the water from the cistern (21) to the deposit (1),

   **characterized in that** the means to carry the water comprise

   a plurality of first cistern wagons (4) configured to hold a certain volume of water, these cistern wagons move between the lower and higher levels and vice versa along the first rails (3),
a second wagon (6) which can hold a plurality of animals (6e),
which moves from the lower and higher level and vice versa along second rails (9) parallel to the first rails (3),
a path (10) for the animals to return (6e) from the lower to the higher level and,
a cable (5) to connect the first cistern wagons (4) and the second wagon (6),

one of the ends of the cable (5) is connected to a fixed anchoring point (2a), situated at the higher level and the other end is connected to the higher part of the second wagon (6); the cable (5) goes through at least one movable pulley (2b) connected to the upper part of each of the first wagons (4); later, this cable (5) goes through a first fixed pulley (2c) fixed to the ground and placed at a height higher than the deposit (1) which is, according to the vertical, aligned to the first rails (3); and later, the cable goes through a second fixed pulley (2d), fixed to the ground and placed at the same height than the first pulley which is, according to the vertical, aligned to the second rails (9) of the second wagon (6) until reaching an anchoring point (2e) to the second wagon (6), so that both the first (4) and second (6) wagons adopt two positions, a higher position in which the wagons are situated at the higher level, and a lower position in which the wagons are situated at the lower level; thus satisfying that when the first wagons (4) are situated at their higher position, the second wagon (6) is situated at its lower position, and vice versa.

2.  Hydroelectric power station according to claim 1, **characterized in that** the cistern (21) is supported by a plurality of columns (21 b) which help place the cistern in a fundamentally horizontal position; the cistern having in the front part of its bottom a plurality of gates (21a) for the expulsion of the water inside to the first cistern wagons (4).

3.  Hydroelectric power station according to claims 1 and 2, **characterized in that** the lower level of the first (3) and second (9) rails, respectively, have stops (3a) and (9a) which stop the downward movement of the first (4) and second (6) wagons.

4.  Hydroelectric power station according to claims 1 to 3, **characterized in that** each of the first cistern wagons (4) comprises parallelepiped closed bodies which have an opening (4c) in the front area of its upper wall, aligned to the cistern (21) gates (21a) when the corresponding first wagon (4) is placed in its lower position; each of the first wagons having wheels (4d) in their lower walls to allow the movement of the wagon (4) along the first rails (3), on the back part of this lower wall there is an emptying valve, configured to pour the water into the deposit (1) when the first wagon (4) is in its upper position and, **in that** each of the first wagons (4) has several partitions (4a) perpendicularly placed on the wagon front wall and being these partitions parallel to one another.

5.  Hydroelectric power station according to claims 1 to 4, **characterized in that** the second wagon (6) has a rectangular shape and comprises a fenced platform (6b) consisting of a boarding (6b1) and from which there stems a plurality of vertical downward supports (6a) on whose end there are the wagon wheels (6d), which move along the second rails (9); the second wagon (6) featuring a gate (6c) at the front part of one of its sides for the animals to go in and out.

EP 2 273 100 A1

FIG.1

12

FIG.2

FIG.3

# FIG.4

# FIG.5

*FIG.6*

*FIG.7*

Europäisches
Patentamt

European
Patent Office

Office européen
des brevets

# EUROPEAN SEARCH REPORT

**Application Number**

EP 09 38 0116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 06 881 A1 (MAY BRUNO [DE]) 23 August 2001 (2001-08-23) * abstract; figure 1 * | 1-5 | INV. F03B13/06 F03B17/00 F03B17/02 |
| X | WO 2004/063563 A (CAVALHEIRO MARIO TEIXEIRA [BR]) 29 July 2004 (2004-07-29) * abstract; figures 1,2 * | 1 | |
| X | US 6 546 726 B1 (TOMOIU CONSTANTIN [US]) 15 April 2003 (2003-04-15) * abstract; figures 1,3 * | 1 | |
| X | GB 2 452 329 A (PAYNE STUART JAMES [GB]) 4 March 2009 (2009-03-04) * page 9, line 2 - page 10, line 16; figures 4a,4b * | 1 | |
| A | EP 2 063 102 A (PONTI GIOVANNI [IT]) 27 May 2009 (2009-05-27) * the whole document * | 1-5 | |
| A | US 2005/279085 A1 (MOORE GEORGE V [US] ET AL) 22 December 2005 (2005-12-22) * the whole document * | 1-5 | TECHNICAL FIELDS SEARCHED (IPC) F03B |

The present search report has been drawn up for all claims

| Place of search | Date of completion of the search | Examiner |
|---|---|---|
| Munich | 27 January 2010 | Avramidis, Pavlos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 38 0116

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| DE 10006881 | A1 | 23-08-2001 | NONE | | |
| WO 2004063563 | A | 29-07-2004 | AU 2003287788 A1 | | 10-08-2004 |
| | | | EP 1583903 A1 | | 12-10-2005 |
| | | | US 2006150622 A1 | | 13-07-2006 |
| US 6546726 | B1 | 15-04-2003 | NONE | | |
| GB 2452329 | A | 04-03-2009 | NONE | | |
| EP 2063102 | A | 27-05-2009 | NONE | | |
| US 2005279085 | A1 | 22-12-2005 | NONE | | |

EPO FORM P0459

For more details about this annex : see Official Journal of the European Patent Office, No. 12/82